Europäisches Patentamt

European Patent Office

Office européen des brevets

(11) Publication number: 0 278 207
A2

# EUROPEAN PATENT APPLICATION

(21) Application number: 87830450.0

(22) Date of filing: 21.12.87

(51) Int. Cl.⁴: G09F 3/00 , G09F 3/02

(30) Priority: 24.12.86 IT 2286586

(43) Date of publication of application:
17.08.88 Bulletin 88/33

(84) Designated Contracting States:
CH DE FR GB LI

(71) Applicant: Belloni, Leonardo
Via Dante da Castiglione 33
I-50125 Firenze(IT)

(72) Inventor: Belloni, Leonardo
Via Dante da Castiglione 33
I-50125 Firenze(IT)

(74) Representative: Rapisardi, Mariacristina, Dr.
Proc.
STUDIO TECNICO LEGALE RAPISARDI Largo
V Alpini 15
I-20145 Milano(IT)

(54) Certificate against infringment for the guarantee of origin and the control of the management of the product to which it is combined.

(57) The present invention concerns a certificate of guarantee anti-infringement and for the control of the management of the product to which it is combined, which consists of a flat element (2) which has on its surface a large number of areas for decoding and/or identification by reading or recording equipment operating according to anti-infringement technology; the flat element has at least two sections (8, 9, 10) each of which has at least one service portion (4) capable of receiving an OCR or bar code or however any type of reading which has in numbers or in code all of the information necessary for the management of a certain product.

Fig.1

EP 0 278 207 A2

# CERTIFICATE AGAINST INFRINGEMENT FOR THE GUARANTEE OF ORIGIN AND THE CONTROL OF THE MANAGEMENT OF THE PRODUCT TO WHICH IT IS COMBINED

It is well known that at present a very serious problem for modern industry is to be able to protect the products manufactured by industry from eventual infringers and at the same time to be able to obtain from each product which is manufactured and subsequently put on sale, all of the information necessary for the management of the product. At present the solution of the above problems is carried out and managed separately, which means that one works solely for the protection of products from eventual infringers and for the processing of data which is obtained from the normal labels accompanying the product. This is an unmethodical and therefore extremely unsatisfactory way of establishing an efficient management of the company.

What has been stated clearly implies the disunited actions by the company in being able to follow the product which it has manufactured, from the moment it leaves the factory until it reaches the consumer. These actions lead to a lack of resulting data which are extremely important for the setting up of an effective commercial strategy and for eventually taking legal action against infringers or illegal distributors. The task which this invention has set itself is to eliminate all the drawbacks mentioned above by making a certificate against infringement for the guarantee of origin and the control of the management of the product to which it is combined and which will permit solving these two important problems.

Within the sphere of this task an important aim of the invention is to devise a certificate of guarantee of origin which presents characteristics of irreproducibility and a large number of data which can be processed for an effective management of the company.

Yet another aim of the invention is to devise a certificate of guarantee of origin which permits the systematic recording of eventual attempts at infringement.

Another aim which is not the final one is to make a certificate of guarantee of origin which has a reasonable cost so as to be easily circulated among the public.

This task as well as these and other aims are achieved with a certificate against infringement for the guarantee of origin and the control of the management of the product to which it is combined, characterised by the fact that it consists of a flat element which has on its surface a large number of areas for decoding and/or identification by reading or recording equipment operating according to anti-infringement technology, at least two sections, each with at least one service portion capable of receiving an OCR or bar code or any other type of reading which has in numbers or in code all of the information necessary for a company for the management of a certain product.

Further characteristics and advantages of the invention will derive mainly from the description of a preferred, but not exclusive, performance form of the certificate of guarantee according to illustration of the invention which is indicative but not limited to the attached drawings in which:

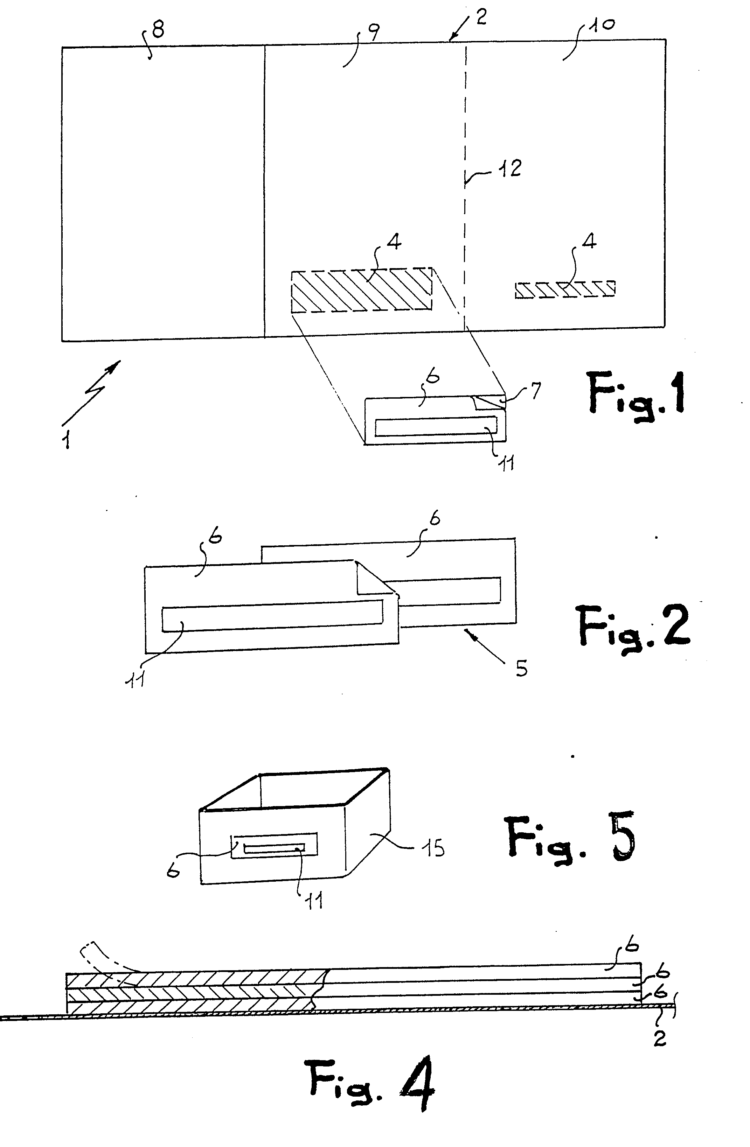

- figure 1 is a plan view of the certificate of guarantee according to the invention;

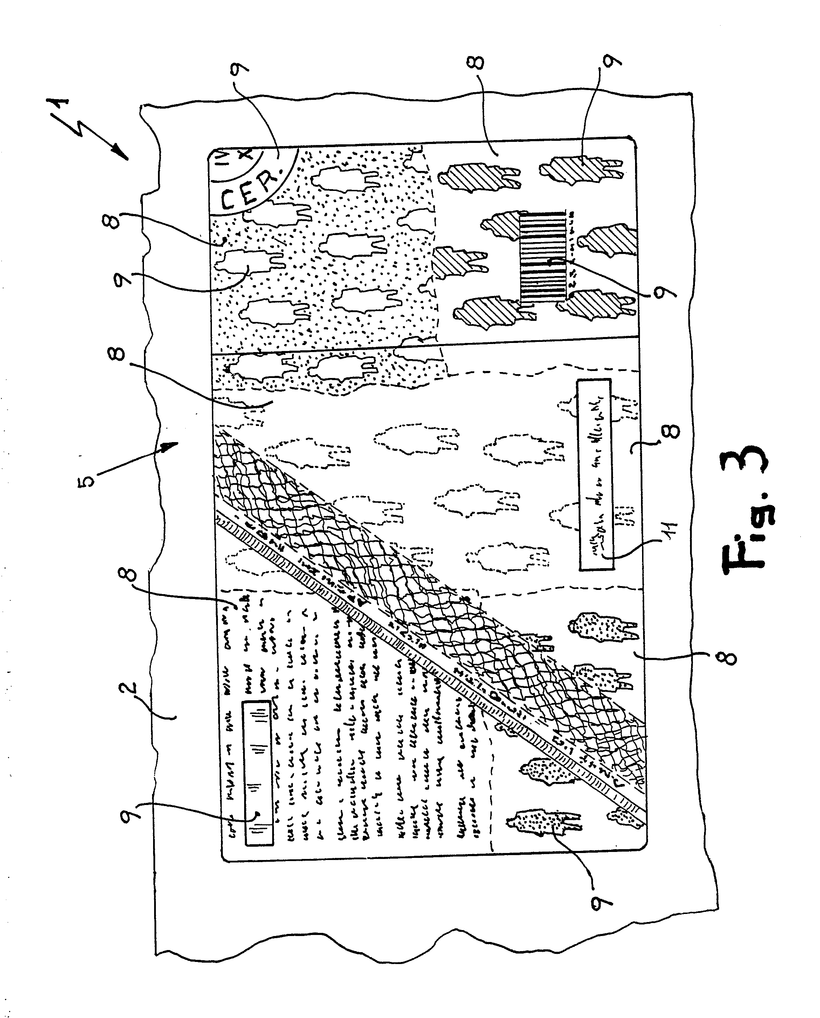

- figure 2 and 3 are a plan view of a disposable two layer label which is put on the certificate of guarantee represented in figure 1;
- figure 4 is a longitudinal section view of the disposable label; and
- figure 5 shows the putting to the first layer of the label on a product to be protected from eventual infringements.

With particular reference to the figures mentioned, the certificate of guarantee according to the invention, shown in reference number 1, consists of a flat element made of a paper or plastic material 2, preferably with a substantially quadrangular shape, which has on its surface a large number of areas for decoding and/or identification by reading or recording equipment operating according to anti-infringement technology and able to determine its irreproducibility.

The flat element 2 has at least two sections and more precisely 3 sections 8, 9 and 10 which at least two have a service portion capable of receiving an OCR or bar code or however any type of readout which has in numbers or in bar code all of the information necessary for a company for the management of a certain product.

On one of the service portions 4, a label 5 is in addition put in a favourable position. The label 5 has two or more adhesive disposable layers, each indicated by number 6 and each of which present the same characteristics and anti-infringement technology present in the last layer 6, opposite the flat element 2 as will be better described later on.

Each of the adhesive layers 6, has various sectors, each indicated by 18 so that each of said sectors 18 has one or more areas identifiable by means of reading devices operating according to the following anti-infringement technology: single tone, two tone and shaded watermarked paper, inks sensitive to the Wood lamp which are present in the paper of the label or in the colour of the lithographic printing or even in the colour of the copperplate printing, materials or microwriting of the label and detectable, but not only, by means of enlargements, parts of paper having a print which contains microwriting, register watermarks with various printing methods, magnetic inks detectable by magnetic detectors, any form of hologram, printing or impressed stamp, a large number of coded numbers, the combination of which gives originality to the pre-arranged number, photgraphically irreproducible inks, inks reactant to particular substances with the possibility of periodic colour variation, and coding for optical scanning.

Additionally, in further detail, each of the adhesive layers 6 can contain information in the form of numbers, abbreviations or coding for optical scanning which, by means of a computer, can easily trace back to the type of product or, for example, to the date of manufacture, of storage or evan to the code of the distributor or warehouse and therefore to the area where the manufactured product was put onto the market.

Each layer 6 of the label 5 has in addition an area 11 made of copying material so that the code imprinted in the service portion 4 of section 10 for example, and which is imprinted in area 11 of the label 5, is imprinted in each area 11 of the underlying layers 6 and on the service portion 4 or section 9 for example.

Sections 10 and 9 are in addition separated by a break off line 12 to facilitate the detachment of part 10 from the certificate of guarantee so that it may be sent to the company of origin which will read the code number in order to carry out all the statistical and commercial controls it desires.

The preparation of the certificate of guarantee which is the subject of this invention is established on the basis of the number of products, of a batch of products, to which the certificate is combined.

After having placed label 5 in the service portion of section 9, the high quality printing of the OCR or bar code for readout is carried out by means of a personal computer and a connected printer both in the service portion of section 10 and in area 11 or the label 5.

The certificates printed in this way are subject to a statistical quality control by means of a system reader and are subsequently sent to the set up lines of the batches which are ready for forwarding.

During the packaging of each product a disposable layer 6 of the label 5 will be removed and put in a suitable position on a product 15 for example.

The certificate of guarantee will be folded and attached to the packaging of the product which will be sent for sale. The products can undergo controls at any time by means of equipment which may even be portable and which contains the number reading key of the code in order to establish whether or not infringement has taken place.

Upon sale section 10 will be sent to the company of origin, which through the readout, by means of the code imprinted in it, will supply all of the information necessary for the desired statistical and commercial controls.

The end client will retain the certificate of guarantee which has the code which characterises the product to which it has been combined so as to be able to demonstrate and not let the eventual gurantee of the product expire.

In practice what has been ascertained is how the certificate of guarantee according the the invention is particularly advantageous because the combination of the certificate to a product which is to be protected from illegal reproductions creates an unequivocal identity for the product itself permitting the direct relation to the guarantee of origin as well as the methodical recording of eventual infringements and a source of information essential for the management of products by a company.

The invention thus conceived is susceptible to numerous modifications and variants all within the area of the invented concept; in addition all the details can be substituted by technically equivalent elements.

In practice all of the dimensions and materials used can be any, according to the requirements and the state of the technique.

**Claims**

1. Certificate against infringement for the guarantee of origin and the control of the management of the product to which it is combined; characterized by the fact that it consists of a flat element (2) having on its surface a large number of areas for decoding and/or identification (18, 19) by means of reading or recording equipment operating according to anti-infringement technology, at least two sections (8, 9, 10) each having at least one service portion (4) capable of receiving an OCR or bar code or however any type of reading which has in numbers or in code all of the information necessary for the management of a certain product by a company.

2. Certificate of guarantee according to claim 1, characterised by the fact that it comprises of an adhesive label 5 with at least two layers (6), of which at least one is in copying material, said label has said areas against infringement for decoding and/or identification and at least one area (11) capable of receiving said code.

3. Certificate of guarantee according to claims 1 and 2, characterised by the fact that at least one layer of said label is of disposable material.

4. Certificate of guarantee according to claim 1 characterised by the fact that said flat element (2) has at least a third section (8) having said areas against infringement for decoding and/or identification.

5. Certificate of guarantee according to one or more of the preceeding claims, characterised by the fact that it includes a break-off line (12) separating at least two sections (9, 10).

6. Certificate of guarantee according to one or more of the preceeding claims, characterised by the fact that said area (11) capable of receiving said code, of each of said layers (6) of said label, is in copying material.

7. Procedure of preparation of the certificate of guarantee against infringement and the control of the management of the product to which it is combined, characterised by the fact that the following phases are included: production of certificates (1) in a pre-arranged number and substantially the same as a number of products (15) of a batch of products, the putting on each of said certificates, a label (5) with at least two disposable layers and having at least an area (11) in copying material, the printing on said certificates and on said area (11) of said labels of a number or bar code having all the information necessary for the management of a said batch of products by a company, statistical quality control by means of a reader of said printed certificates, the removal of one of said disposable layers (6) from said label, the putting of said removed layer on each product of said batch of products, the packaging of said product with one of said certificates corresponding to said layer associated to said product, the sending after sale of said product of a section (10) of said certificate to the manufacture of said batch of products for the statistical and commercial control of these.

8. Certificate of guarantee anti-infringement and of the control of the management of the product to which it is combined and the procedure for its realization, characterised by the fact that one or more of the characteristics described and/or illustrated are included.

Fig.1

Fig.2

Fig. 5

Fig. 4

# Fig. 3

0 278 207